# EUROPEAN PATENT APPLICATION

(11) **EP 4 585 119 A1**
(43) Date of publication of application: **16.07.2025**
(21) Application number: 24217816.8
(22) Date of filing: 05.12.2024
(51) Int. Cl.: A47K 3/40, B32B 5/18, B32B 27/08, B32B 27/30, B32B 27/36, E03C 1/22

(54) **SANITARY WARE**

(30) Priority: 15.01.2024 GB 202400543
(71) Applicant: Kohler Mira Limited, Cheltenham, Gloucestershire GL52 5EP (GB)
(72) Inventor: FENTON, Connor, Cheltenham, GL52 5EP (GB)
(74) Representative: Barker Brettell LLP

(57) **Abstract**

An article of sanitary ware or part thereof, comprising an outer layer and a core. The outer layer comprises a first material and the core comprises a second material. The second material comprises one or more recyclable materials.

## Description

### TECHNICAL FIELD

The present invention relates to an article of sanitary ware or part thereof and a method of producing a core of an article of sanitary ware or part thereof.

### BACKGROUND

Articles of sanitary ware include sinks, baths, toilets, and shower trays, among other examples. These articles may be constructed from a range of different materials. For example, shower trays comprising an acrylonitrile butadiene styrene (ABS) upper layer adhered to and supported by a resin-stone core are known. Such trays are usually manufactured by pouring a resin-stone filler into a mould containing a shell of ABS preformed to the desired shape of the top and sides of the shower tray and hardening the filler to form the core. In this way, the ABS upper layer forms the outer surface of the exposed parts of the tray in its installed position and the core supports the upper layer.

A problem with known shower trays as described above is that such shower trays cannot be completely recycled.

Another problem with known shower trays as described above is that the weight of the resin-stone core can make lifting and carrying the trays during installation difficult.

There is therefore a need for articles of sanitary ware, or parts thereof, which have a higher proportion of material mass which is recyclable and/or which are lightweight.

### SUMMARY

According to a first aspect, there is provided an article of sanitary ware or part thereof, comprising an outer layer and a core. The outer layer comprises a first material and the core comprises a second material. The second material comprises one or more recyclable materials.

The first aspect may provide an article of sanitary ware, or part thereof, in which the core of the article or part is recyclable, and therefore, in some implementations, the majority of the material mass of the article or part as a whole, may be recyclable. This may reduce the environmental impact of the article or part.

The first material may be a first polymeric material. The second material may be a second polymeric material.

The second polymeric material may comprise, or consist essentially of, a polyester. The second polymeric material may comprise, or consist essentially of, a thermoplastic polymer resin of the polyester family. The second polymeric material may comprise, or consist essentially of, a polyalkylene terephthalate such as polyethylene terephthalate (PET). The second polymeric material may comprise, or consist essentially of, a polyalkylene such as polyethylene. The second polymeric material may comprise, or consist essentially of, high density polyethylene (HDPE).

The use of a polymeric material for the core of the article or part may reduce the weight of the article or part, particularly when compared with known articles or parts which utilise a resin-stone core or the like. This may make the article or part easier to transport and install, as well as reducing the environmental impact of transporting the article or part.

The core may comprise a top surface and an underside. The top surface and/or underside may be substantially flat. The top surface and/or underside may be devoid of any strengthening ribs or protrusions or the like. In particular, the underside may preferably be devoid of any strengthening ribs or protrusions or the like. A core of a conventional article of sanitary ware or part thereof, such as a resin-stone core or the like, may require strengthening ribs or protrusions in order to provide a given loading capacity of the article or part. In contrast, a polymeric core may not require such strengthening features in order to provide the same given loading capacity. As such, less material may be required to produce a polymeric core which provides the same loading capacity as a conventional core. This has advantages in terms of reducing environmental impact as well as reducing manufacturing costs and complexity.

Furthermore, where the core is produced using a moulding process, such as that described below, the absence of strengthening ribs or protrusions or the like may make it easier to remove the formed core from the mould. Strengthening ribs or protrusions or the like increase the surface area of the core that may become adhered to a surface of the mould during manufacture. This may increase the likelihood that the formed core adheres to the mould, thereby making it more difficult to remove the formed core form the mould.

The top surface and/or underside may comprise one or more strengthening ribs and/or one or more strengthening protrusions. The one or more strengthening ribs and/or one or more strengthening protrusions may advantageously allow for less material overall to be required to form the core, thereby further reducing the weight of the core.

The one or more strengthening ribs and/or one or more strengthening protrusions form a spiderweb pattern. The underside may comprise a central portion comprising one or more strengthening ribs. The central portion may comprise one or more linear strengthening ribs extending outwards in a direction extending from a centre of the central portion towards an edge of the central portion.

The central potion may comprise one or more circular strengthening ribs. The one or more circular strengthening ribs may extend circumferentially about a centre of the central portion. The one or more circular strengthening ribs may comprise a plurality of circular strengthening ribs. The plurality of circular strengthening ribs may be concentric. The central portion may comprise one or more intermediate strengthening ribs extending between the plurality of circular strengthening ribs.

The underside may comprise one or more strengthening protrusions. The central portion of the underside may comprise the one or more strengthening protrusions. The one or more strengthening protrusions my comprise a central strengthening protrusion. The one or more circular strengthening ribs may extend circumferentially about the central strengthening protrusion. The one or more circular strengthening ribs may comprise a plurality of concentric circular strengthening ribs.

The underside may comprise one or more threshold strengthening ribs. The one or more threshold strengthening ribs may extend around the outside of the central portion of the underside. Each of the one or more threshold ribs may extend parallel to an edge of the central portion. Each of the one or more threshold ribs may extend adjacent an edge of the central portion. The one or more threshold strengthening ribs may advantageously further allow for further less material overall to be required to form the core, as discussed above. In other implementations, the provision of the one or more strengthening ribs and/or one or more strengthening protrusions with the omission of the threshold ribs may provided the advantages of the one or more strengthening ribs and/or one or more strengthening protrusions, while the omission of the threshold ribs may make it easier to remove the core from a mould during manufacture, as discussed above with reference to a substantially flat central portion of the underside.

The outer layer may comprise a panel or a sheet or may consist essentially of a panel or a sheet. The outer layer may comprise a shell defining at least partially an internal volume. The core may be configured to be received at least partially in the internal volume. The shell may define 50% or more of the internal volume, 80% or more of the internal volume or the entirety of the internal volume. The shell may comprise an upper portion and one or more side walls extending downwards from the upper portion. The upper portion may be generally planar. The outer layer or shell may provide a top surface of the article or part and the core may provide an underside of the article or part. The upper portion of the shell may provide the top surface of the article or part. The article or part may comprise a configuration of the outer layer or shell which is suited to a particular application of the article or part.

The core may be a preformed core. As used herein, the term 'preformed' may mean that the core is produced prior to assembling the core and the outer layer to provide the complete article or part. A known article or part may be produced by providing an outer layer or shell and pouring liquid material into the outer layer or shell which then solidifies to form a core. In contrast, the preformed core may be produced separately from the outer layer before the core and the outer layer are assembled to provide the complete article or part. The use of a preformed core may simplify the process of producing the article or part and may reduce the likelihood of imperfections in the core, for example as a result of the core being distorted or warped during manufacture.

The core may consist essentially of the second material. The second material may comprise, or consist essentially of, a polyalkylene terephthalate such as polyethylene terephthalate (PET). The second material may comprise, or consist essentially of, a different material, such as high density polyethylene (HDPE). PET is an example of a widely recycled polymeric material. Hence, the core, or the article or part as a whole, may be relatively easily recyclable. A further advantage of PET is that it can be sourced as a recycled material and then be further recycled after use. For example, PET made entirely from recycled plastic bottles can be used as the second material and can then be relatively easily recycled at the end use of the article of sanitary ware or part thereof.

The core may comprise a foam. The core may comprise a polymer foam, e.g. a PET foam. The use of a core comprising a foam may further reduce the weight of the article or part as a whole.

The first material and the second material may be different materials or may be the same material. The first material and the second material being different materials may be advantageous in that different material properties can be utilise for the different structural and functional requirements, such as thickness, strength, and weight, of the outer layer and the core. The first material and the second material being the same material may be advantageous in terms of simplifying manufacture.

The outer layer may consist essentially of the first material. The first material may comprise, or consist essentially of, one or more recyclable materials. This may render the article or part as a whole, or render substantially all of the article or part, fully recyclable. This may reduce or minimise the environmental impact of the article or part as a whole.

For instance, the first material may comprise, or consist essentially of, acrylonitrile butadiene styrene (ABS). This may be advantageous as ABS is a standard material used in the manufacture of articles of sanitary ware or parts thereof and therefore is readily available.

The article may be a shower tray. Alternatively, the article may be a sink, a bath, a toilet, or any other article of sanitary ware.

The core may comprise one or more areas for receiving at least partially one or more inserts. The one or more inserts may be configured to be coupled to an additional component. The additional component may comprise a leg or riser panel or the like. For example, where the article of sanitary ware comprises a shower tray, an insert may be used to attach riser legs or panels to the shower tray, wherein the riser legs or panels are used to raise the shower tray above the floor to create space between the shower tray and the floor for waste pipes and the like. The one or more inserts may comprise a body and a threaded bore extending at least partially through the body. The threaded bore may be for receiving a threaded protrusion of an additional component.

According to a second aspect, there is provided an article of sanitary ware or part thereof, comprising an outer layer and a core, wherein the core comprises one or more polymeric materials. The core may consist essentially of one or more polymeric materials. The core may consist essentially of a single polymeric material.

The second aspect may provide an article of sanitary ware, or part thereof, in which the weight of the article or part is reduced compared to known articles or parts which utilise a resin-stone core or the like. This may make the article or part easier to transport and install, as well as reducing the environmental impact of transporting the article or part.

The article or part of the second aspect may comprise any of the features of the first aspect described above.

According to a third aspect, there is provided a plumbing or an ablutionary system comprising the article or part of the first or second aspect.

The system may comprise a fluid delivery device. The fluid delivery device may comprise a sprayer for a shower.

The article or part may comprise a waste configured to be connected to a drain. A heat transfer apparatus may be arranged to recover heat from water that flows, in use, through the waste. The heat recovered from water that flows, in use, through the waste may be utilised to heat a stream of water being supplied, directly or indirectly, to the fluid delivery device. Such embodiments may be particularly advantageous where the material of the core of the article or part comprises or consists essentially of PET. The thermal conductivity of PET is low. For example, the thermal conductivity of PET is lower than the resin stone of cores of conventional articles of sanitary ware or parts thereof. Therefore, less heat is transferred from water that flows, in use, through the waste to the PET core, which means more heat is transferred to the stream of water being supplied, directly or indirectly, to the fluid delivery device. In other words, less heat is lost to the core of the article or part so that more heat is recovered by the heat transfer apparatus for heating the stream of water being supplied, directly or indirectly, to the fluid delivery device.

According to a fourth aspect, there is provided a method of producing a core of an article of sanitary ware or part thereof. The article or part may be the article or part of the first or second aspect of the invention. The method comprises inserting beads of one or more recyclable materials into a mould and heating the mould with the beads in the mould to cause the beads to fuse together. The beads may comprise polymeric beads.

Heating the mould with the beads in the mould may cause the beads to expand as they fuse together. The beads may form a foam as they expand and fuse together. The method of the fourth aspect may not result in the production of any significant amount of waste material during production of the core.

The method may comprise heating the mould with the beads in the mould to a temperature of 150°C or more, 160°C or more, 170°C or more, 180°C or more, 190°C or more or 200°C or more.

The method may comprise heating the mould with the beads in the mould to a temperature of up to 180°, up to 190°C, up to 200°C, up to 210°C, up to 220°C, up to 230°C or up to 240°C.

The method may comprise heating the mould with the beads in the mould to a temperature within the range of 150-240°C. The temperature may be in the range of 150-210°C, 160-200°C, 170-190°C, or 175-185°C. The temperature may be in the range of 180-240°C, 190-230°C, 200-220°C, or 205-215°C. The temperature may be 210°C.

The method may comprise heating the mould with the beads in the mould for a predetermined heating period.

The predetermined heating period may be 30 minutes or more, 40 minutes or more or 50 minutes or more.

The predetermined heating period may be up to 60 minutes, up to 70 minutes, up to 80 minutes or up to 90 minutes.

The predetermined heating period may be in the range of 40-70 minutes. The predetermined heating period may be in the range of 45-65 minutes or 50-60 minutes. The predetermined heating period may be 50 minutes or 60 minutes.

The method may comprise allowing the mould to cool after heating the mould with the beads in the mould for a predetermined cooling period.

The predetermined cooling period may be 20 minutes or more, 30 minutes or more, 40 minutes or more or 50 minutes or more.

The predetermined cooling period may be up to 60 minutes, up to 70 minutes or up to 80 minutes.

The predetermined cooling period may be in the range of 40-70 minutes. The predetermined cooling period may be in the range of 45-65 minutes or 50-60 minutes. The predetermined cooling period may be 50 minutes or 60 minutes.

The method may comprise pre-heating the mould prior to inserting the beads into the mould.

The beads may comprise, or consist essentially of, a polyester. The beads may comprise, or consist essentially of, a thermoplastic polymer resin of the polyester family. The beads may comprise, or consist essentially of, a polyalkylene terephthalate such as polyethylene terephthalate (PET). The beads may comprise, or consist essentially of, a polyalkylene such as polyethylene. The beads may comprise, or consist essentially of, high density polyethylene (HDPE).

The beads may comprise a core encapsulated by a skin. The beads may comprise a cellular core encapsulated by a skin. The beads may comprise a closed composite structure.

The cellular core may comprise a microcellular layer adjacent the skin and a fine-cell centre part. The fine-cell centre part may be homogeneously structured.

The microcellular layer may have a thickness of up to 200 µm, up to 150 µm or up to 50 µm. The microcellular layer may have a cell size of less than 50 µm, less than 30 µm or less than 15 µm. The microcellular layer may have an average cell size of less than 50 µm, less than 30 µm or less than 15 µm. The microcellular layer may have a maximum cell size of less than 50 µm, less than 30 µm or less than 15 µm.

The fine-cell centre part may have a maximum cell size of less than 500 µm or less than 400 µm. The fine-cell centre part may have an average cell size of from 30 µm to 300 µm. The fine-cell centre part may comprise cells having a size distribution, in which at least 90%, at least 95%, at least 98% or substantially all of the cells have a cell size of from 30 µm to 300 µm.

The skin may have a thickness of less than 250 µm, less than 200 µm, less than 150 µm, less than 120 µm or less than 100 µm. The skin may have a thickness at least 10 µm, at least 20 µm or at least 30 µm. The skin may have a thickness of up to 80 µm, up to 120 µm, up to 150 µm or up to 200 µm.

For instance, in implementations, the beads may be of a type disclosed in EP2567799A1.

The mould may comprise an A nest and/or a B nest. The A nest may comprise a moulding surface configured to form a top surface of the core. The B nest may comprise a moulding surface configured to form an underside of the core. The A nest and the B nest may define a sealed internal volume when the A nest and the B nest are secured together with the moulding surface of the B nest facing the moulding surface of the A nest.

The method may comprise:
inserting the beads into the A nest;
placing the B nest on top of the A nest such that the beads are arranged between the moulding surface of the B nest and the moulding surface of the A nest;
securing the A nest and the B nest together; and
heating the mould with the A nest and the B nest secured together.

The method may comprise spreading the beads, e.g. evenly spreading the beads, across the moulding surface of the A nest.

The A nest and/or the B nest may comprise one or more locating flange for aiding in aligning the A nest and the B nest prior to securing the A nest and the B nest together. Preferably, both the A nest and the B nest comprise a locating flange. The A nest and/or the B nest may comprise one or more recess configured to receive the one or more locating flange of the other of the nest. The A nest may comprise a locating flange and the B nest may comprise a recess configured to receive the locating flange, and/or vice versa. The locating flange and/or the recess configured to receive the locating flange may extend continuously around the perimeter of the respective A nest and/or B nest. The method may comprise inserting the or each locating flange into the or one of the recesses to align the A nest and the B nest together.

Securing the A nest and the B nest together may comprise clamping, e.g. evenly clamping, the A nest and the B nest together. As the beads expand within the mould as the mould is heated, the beads will act to push the A nest and the B nest away from each other. If there are areas of the mould at which the A nest and the B nest are not sufficiently secured together, this could cause the A nest and the B nest at these areas to move apart from each other, thereby allowing the beads at these areas to over-expand, which in turn may affect the quality of the core. Evenly clamping the A nest and the B nest together may help to mitigate this problem.

Clamping, e.g. evenly clamping, the A nest and the B nest together may comprise clamping the A nest and the B nest together at intervals around a perimeter of the A nest and the B nest, optionally including at one or more corners of the A nest and the B nest, e.g. at each corner of the A nest and the B nest. The A nest may comprise one or more bores extending therethrough, e.g. a bore extending through each corner of the A nest. The B nest may comprise one or more bores extending therethrough, e.g. a bore extending through each corner of the B nest. Each of the bores of the B nest may align with one of the bores of the A nest when the B nest is placed on top of the A nest. A fastener, such as a bolt or screw, may be receivable within each bore of the B nest and the aligned bore of the A nest to clamp the A nest and the B nest together.

The A nest and/or the B nest may be square in plan view, such that the A nest and/or the B nest may comprise a bore extending through each of the four corners of the respective nest. In other implementations, the A nest and/or the B nest may be any suitable shape with any number of corners.

The moulding surface of the B nest may comprise a central portion extending over a majority of the moulding surface. The central portion may be substantially flat. The central portion may be devoid of any protrusions, ribs, recesses, indentations, or the like. The moulding surface of the B nest may comprise one or more recesses for forming one or more corresponding ribs or projections on a surface of the core, for example as described above.

The A nest and/or the B nest may be formed at least in part from a metal such as aluminium.

The moulding surface of one or more of the A nest and the B nest may comprise a non-stick material, e.g. a non-stick coating such as a polytetrafluoroethylene (PTFE) coating, configured to inhibit bonding of the beads to the respective moulding surface during heating. For example, the non-stick coating may comprise a non-stick tape and/or a non-stick spray, e.g. a PTFE tape and/or a PTFE spray. In an example implementation, the non-stick coating of the moulding surface of the A nest may comprise PTFE tape and the non-stick coating of the moulding surface of the B nest may comprise a PTFE spray, or *vice versa.* The use of a non-stick material, e.g. a non-stick coating, may make the core easier to remove from the mould and/or may minimise any reactive forces on the core during removal of the core, due to adhesion between the core and the moulding surface(s) of the mould, which may affect the structural integrity of the core.

According to a fifth aspect, there is provided a method of producing an article of sanitary ware or part thereof, the article of part comprising an outer layer and a core. The method comprises producing the core using the method of the fourth aspect and applying the outer layer to the core. The article or part may be the article or part of the first or second aspect.

The outer layer may be produced using a thermoforming process. The outer layer may be bonded to the core. The outer layer may be bonded to the core using an adhesive. The adhesive may comprise a PET film.

According to a sixth aspect, there is provided a mould for producing a core of an article of sanitary ware or part thereof, the mould comprising:
an A nest comprising a moulding surface configured to form a top surface of the core; and
a B nest comprising a moulding surface configured to form an underside of the core; wherein
the A nest and the B nest are configured to be secured together such that the A nest and the B nest define a sealed internal volume when the A nest and the B nest are secured together with the moulding surface of the B nest facing the moulding surface of the A nest.

The A nest and/or the B nest may comprise a locating flange for aiding in aligning the A nest and the B nest prior to securing the A nest and the B nest together. The A nest and/or the B nest may comprise a recess configured to receive the locating flange. The A nest may comprise a locating flange and the B nest may comprise a recess configured to receive the locating flange, or *vice versa.*

The A nest may comprise one or more bores extending therethrough, e.g. a bore extending through each corner of the A nest. The B nest may comprise one or more bores extending therethrough, e.g. a bore extending through each corner of the B nest. Each of the bores of the B nest may align with one of the bores of the A nest when the B nest is placed on top of the A nest. The mould may comprise a plurality of fasteners, such as a plurality of bolts, screws, or the like. Each of the plurality of fasteners may be receivable within each bore of the B nest and the aligned bore of the A nest. Each of the plurality of fasteners may be fastenable when received within the respective bores to clamp the A nest and the B nest together.

The moulding surface of the B nest may comprise a central portion extending over a majority of the moulding surface. The central portion may be substantially flat. The central portion may be devoid of any protrusions, ribs, recesses, indentations, or the like. The moulding surface of the B nest may comprise one or more recesses for forming one or more corresponding ribs or projections on a surface of the core, for example as described above.

The moulding surface of one or more of the A nest and the B nest may comprise a non-stick material, e.g. a non-stick coating such as a polytetrafluoroethylene (PTFE) coating, configured to inhibit bonding of the beads to the respective moulding surface during heating. For example, the non-stick coating may comprise a non-stick tape and/or a non-stick spray, e.g. a PTFE tape and/or a PTFE spray. In an example implementation, the non-stick coating of the moulding surface of the A nest may comprise PTFE tape and the non-stick coating of the moulding surface of the B nest may comprise a PTFE spray, or *vice versa.* The use of a non-stick material, e.g. a non-stick coating, may make the core easier to remove from the mould and/or may minimise any reactive forces on the core during removal of the core, due to adhesion between the core and the moulding surface(s) of the mould, which may affect the structural integrity of the core.

The skilled person will appreciate that except where mutually exclusive, a feature or parameter described in relation to any of the above aspects may be applied to any other aspect. Furthermore, except where mutually exclusive, any feature or parameter described herein may be applied to any aspect and/or combined with any other feature or parameter described herein.

### BRIEF DESCRIPTION OF THE DRAWINGS

Implementations will now be described, by way of example only, with reference to the accompanying drawings, in which:
Figure 1a shows a schematic cross-sectional side elevation of an article of sanitary ware, in the form of a shower tray;
Figure 1b shows an isometric top view of an outer layer, in the form of a shell, of the shower tray of Figure 1a;
Figure 1c shows an isometric top view of a core of the shower tray of Figure 1a;
Figure 1d shows an isometric underside view of the shower tray of Figure 1a;
Figure 2a shows a top view of a core for a shower tray according to another example;
Figure 2b shows an underside view of the core of Figure 2a;
Figure 2c shows an underside view of a variation of the core of Figure 2a;
Figure 3a shows schematically a shower system including a heat exchange apparatus;
Figure 3b shows schematically another shower system;
Figure 4a shows an assembled mould for producing the core of the shower tray of Figure 2a;
Figure 4b shows an A nest of the mould of Figure 4a;
Figure 4c shows a B nest of the mould of Figure 4a;
Figure 5 shows an assembled mould for producing the core of the shower tray of Figure 2a;
Figure 6a shows beads of recyclable polymeric material, for use in a method of producing a core of an article of sanitary ware or part thereof, prior to heating;
Figure 6b shows the beads of Figure 6a within a mould nest after heating;
Figure 7 shows a flow chart illustrating a method of producing a core of an article of sanitary ware or part thereof;
Figure 8a shows beads inserted into an A nest of a mould during the method of Figure 7;
Figure 8b shows an underside of a core of an article of sanitary ware, with the core situated in the A nest of Figure 8a, during the method of Figure 7;
Figure 8c shows a top surface of the core of Figure 8b with the core removed from the mould;
Figure 9 shows an underside of an example of a core of an article of sanitary ware produced using the method of Figure 7;
Figure 10a shows a top surface of another example of a core of an article of sanitary ware produced using the method of Figure 7;
Figure 10b shows an underside of the core of Figure 10a;
Figure 11 shows an underside of another example of a core of an article of sanitary ware produced using the method of Figure 7;
Figure 12 shows an underside of another example of a core of an article of sanitary ware produced using the method of Figure 7;
Figure 13a shows an underside of another example of a core of an article of sanitary ware produced using the method of Figure 7;
Figure 13b shows a top surface of the core of Figure 13a;
Figure 14a shows an underside of another example of a core of an article of sanitary ware produced using the method of Figure 7;
Figure 14b shows a top surface of the core of Figure 14a;
Figure 15a shows an underside of another example of a core of an article of sanitary ware produced using the method of Figure 7; and
Figure 15b shows a variation of the B nest of Figure 4c used to form the underside of the core of Figure 15a.

### DETAILED DESCRIPTION

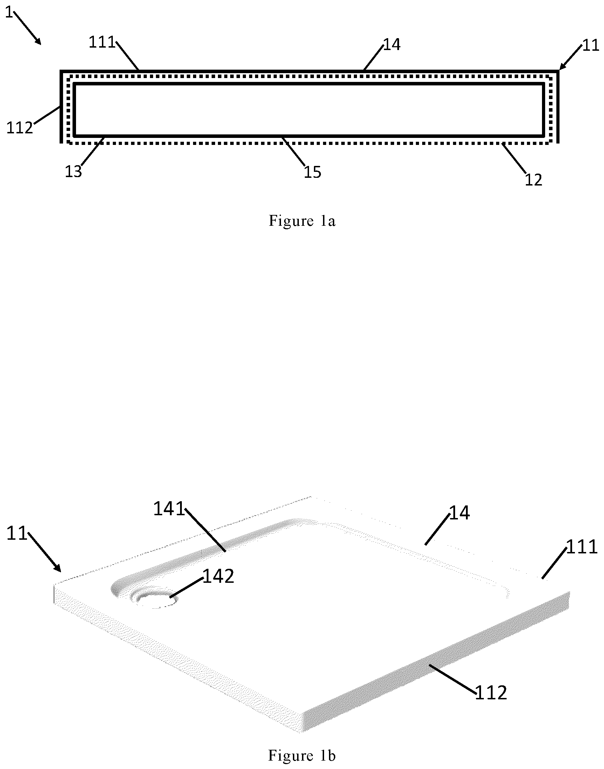

Figure 1a shows a schematic cross-sectional side elevation of an article of sanitary ware. In this example implementation, the article of sanitary ware is a shower tray 1. In other implementations, the article of sanitary ware may be a sink, a bath, a toilet, or any other article of sanitary ware or part thereof. Other implementations may provide part of an article of sanitary ware, such as a pedestal for a sink, a tank for a toilet, or the like.

The shower tray 1 comprises an outer in the form of a shell 11. The material of the shell 11 may consist essentially of acrylonitrile butadiene styrene (ABS), but in other implementations, one or more other materials may be additionally or alternatively used. The shell 11 partially defines an internal volume 12, as indicated by the dotted line in Figure 1a. The shell 11 comprises an upper portion 111 and a continuous side wall 112 extending downwards from the upper portion 111. The side wall 112 extends continuously around the perimeter of the internal volume 12.

The shower tray 1 further comprises a preformed core 13 configured to be received entirely within the internal volume 12. The core 13 may consist essentially of a single recyclable material such as a polymeric material, e.g. in the form of a polymeric foam. The polymeric material may comprise, or consist essentially of, a polyalkylene terephthalate such as polyethylene terephthalate. In other implementations, the core 13 may additionally or alternatively comprise one or more other recyclable materials. When assembled, a top surface 14 of the shell 11 provides a top surface of the shower tray 1 and an underside 15 of the core 13 provides an underside of the shower tray 1. In use, the underside of the shower tray 11 may rest on the floor of a bathroom or other suitable environment and the feet of a user contact the top surface of the shower tray 1. Sealant will typically be provided around the lower perimeter of the side wall 112 of the shell 11, between the side wall 112 and the floor, in order to inhibit water ingress into the internal volume 12. Therefore, when installed, the internal volume 12 is completely defined by the sealant, the side wall 112 of the shell 11, and the floor.

Figure 1b shows an isometric top view of the shell 11 of the shower tray of Figure 1a. The top surface 14 of the shell 11 comprises a recess 141 for containing water in use and a drain hole 142 configured to receive water from the recess 141 for draining water from the shower tray in use. When installed, the drain hole 142 is in fluid communication with a waste water pipe or the like.

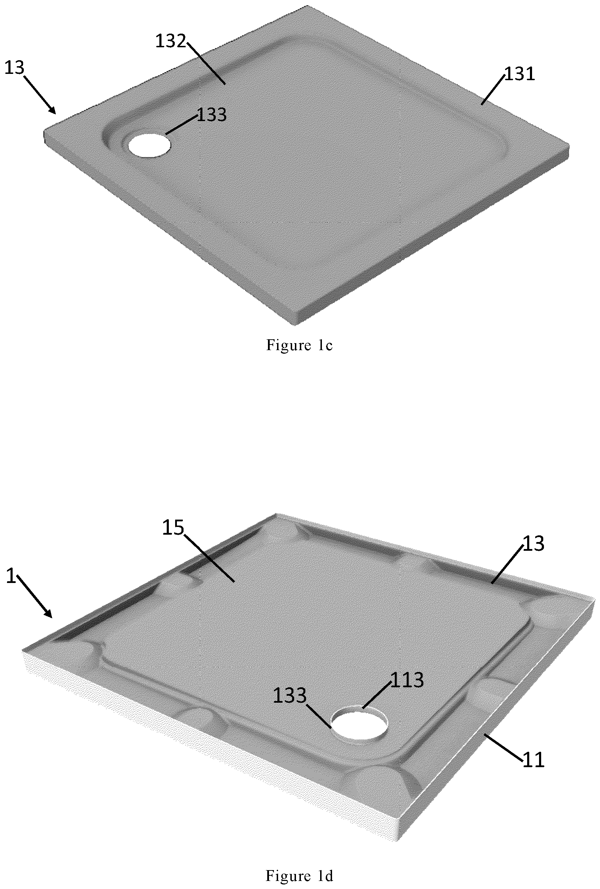

Figure 1c shows an isometric top view of the core 13 of the shower tray of Figure 1a. The core 13 comprises a top surface 131 comprising a recess 132 and a drain hole 133. It will be appreciated that the recess of the top surface of the shell as shown in Figure 1b will form a corresponding projection which forms part of the underside of the shower tray. When assembled, the projection formed by the recess of the top surface of the shell is received within the recess 132 of the top surface 131 of the core 13, and the drain hole of the top surface of the shell as shown in Figure 1b is aligned with the drain hole 133 of the top surface 131 of the core 13.

Figure 1d shows an isometric underside view of the shower tray 1 of Figure 1a. As shown, the core 13 is received within the internal volume partially defined by the shell 11. The underside of the shower tray 1, i.e., the underside 15 of the core 13, comprises a central portion 151 extending over a majority of the underside 15. The central portion 151 in this example is substantially flat. The shell 11 comprises a drain extension 113 configured to extend through the drain 133 of the core 13. In use, the drain extension 113 is attached to a waste water pipe or the like.

It will be appreciated that the shower tray of Figure 1a is merely illustrative and is a non-limiting example of an article of sanitary ware that may be provided by an implementation of the disclosure. Any article of sanitary ware, or part thereof, may be provided in accordance with implementations of the disclosure.

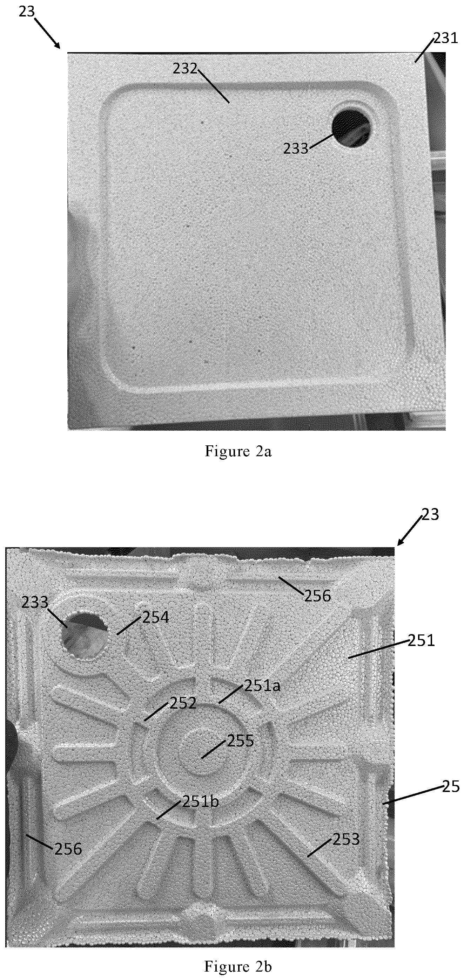

Figure 2a shows a top view of a core 23 for a shower tray according to another example. Figure 2b shows an underside view of the core of Figure 2a. Features of the core 23 in common with the core of the shower tray of Figure 1a are indicated in Figures 2a and 2b using the same reference signs preceded with '2' in place of '1'. The core 23 is suitable for replacing the core of the shower tray of Figure 1a to form a shower tray according to another example.

As shown in Figure 2b, the central portion 251 of the underside 25 comprises two concentric circular strengthening ribs 251a, 251b extending circumferentially about the centre of the central portion 251. The central portion 251 further comprises a plurality of intermediate strengthening ribs 252 extending between the circular strengthening ribs 251a, 251b. The intermediate strengthening ribs 252 are spaced circumferentially equidistantly. The central portion 251 further comprises a plurality of linear strengthening ribs 253 extending outwards in a direction extending from the centre of the central portion 251 towards an edge of the central portion 251. For clarity, not all of the linear strengthening ribs 253 are labelled. The central portion 251 further comprises a circumferential strengthening rib 254 extending around the drain hole 233. The central portion 251 further comprises a central strengthening protrusion 255. The circular strengthening ribs 251a, 251b, the intermediate strengthening ribs 252, the linear strengthening ribs 253, and the central strengthening protrusion 255 together form a spiderweb pattern. In other examples, one or more of the circular strengthening ribs 251a, 251b, the intermediate strengthening ribs 252, the linear strengthening ribs 253, circumferential strengthening rib 254, and/or the central strengthening protrusion 255 may be absent.

The underside 25 further comprises a plurality of threshold strengthening ribs 256 extending around the outside of the central portion 251. For clarity, not all of the threshold ribs are labelled. Each of the threshold ribs 256 extends parallel to an edge of the central portion 251 adjacent the edge of the central portion 251.

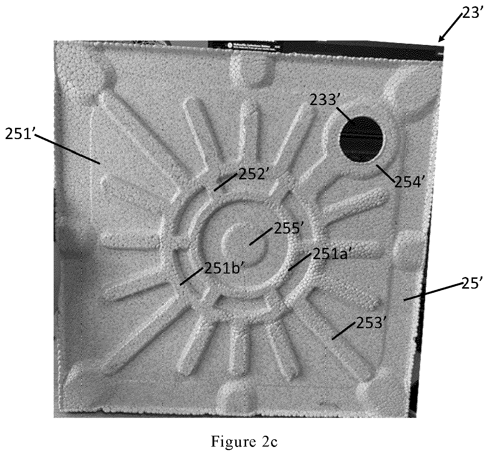

Figure 2c shows an underside view of a variation 23' of the core of Figure 2a. Features of the core 23' in common with the core of Figure 2a are indicated in Figure 2c using the same reference signs followed by a quotation mark, e.g., 23'. The core 23' differs from the core of Figure 2a in that the threshold ribs are absent.

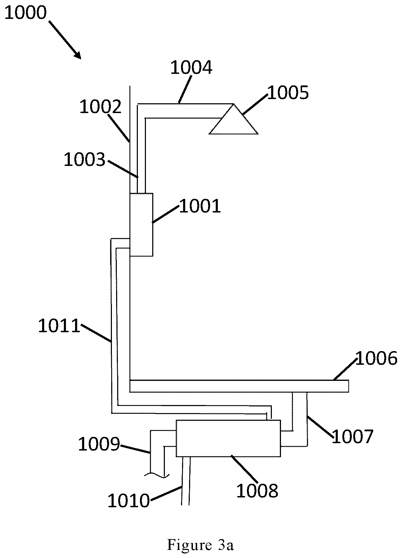

Figure 3a shows schematically a shower system 1000. The shower system 1000 constitutes an example of a plumbing system or an ablutionary system according to the disclosure.

The shower system 1000 includes an instantaneous water heater 1001 mounted on a wall 1002. The instantaneous water heater 1001 may comprise one or more electric heating elements operable to heat water flowing through the instantaneous water heater 1001 to a user-desired temperature.

A riser bar 1003 and an arm 1004 extending away from the wall 1002 connect the instantaneous water heater 1001 to a shower head 1005. The riser bar 1003 and the arm 1004 convey, in use, a stream of water having the user-desired temperature to the shower head 1005.

A shower tray 1006 according to the present disclosure is located a distance beneath the shower head 1005. The shower tray 1006 is arranged to collect water emitted from the shower head 1005. The shower tray 1006 may be one of the example shower trays described herein, e.g. the shower tray 1 of Figure 1a.

A waste 1007 is connected to the shower tray 1006. The waste 1007 is configured to receive a waste water stream from the shower tray 1006.

The shower system 1000 includes a heat exchange apparatus 1008.

A waste water inlet of the heat exchange apparatus 1008 is connected to the waste 1007. The waste water inlet receives, in use, the waste water stream from the waste 1007. The heat exchange apparatus 1008 comprises a waste water outlet. The waste water outlet is connected to a drain pipe 1009 for conveying the waste water stream to a drain (not shown).

The heat exchange apparatus 1008 comprises a waste water stream flow path from the waste water inlet to the waste water outlet, the waste water stream flow path being provided at least in part by a waste water conduit.

The shower system 1000 includes a first water supply conduit 1010 configured to convey a water supply stream from a mains water supply to a water supply inlet of the heat exchange apparatus 1008. The heat exchange apparatus 1008 comprises a water supply outlet. A second water supply conduit 1011 connects the water supply outlet to an inlet of the instantaneous water heater 1001. The second water supply conduit 1011 is configured to convey, in use, the water supply stream from the heat exchange apparatus 1008 to the instantaneous water heater 1001.

The heat exchange apparatus 1008 comprises a water supply stream flow path from the water supply inlet to the water supply outlet, the water supply stream flow path being provided at least in part by a water supply pipe configured such that, in use, the water supply stream flowing in the water supply pipe is in a heat exchanging relationship with the waste water stream flowing along the waste water conduit.

When the waste water stream has a higher temperature than the water supply stream heat is exchanged from the waste water stream to the water supply stream, thereby increasing the temperature of the water supply stream prior to its being received by the instantaneous water heater 1001.

The heat exchange apparatus 1008 may be located beneath the shower tray 1006, e.g. within a plinth or within a cavity underneath a floor such as between joists.

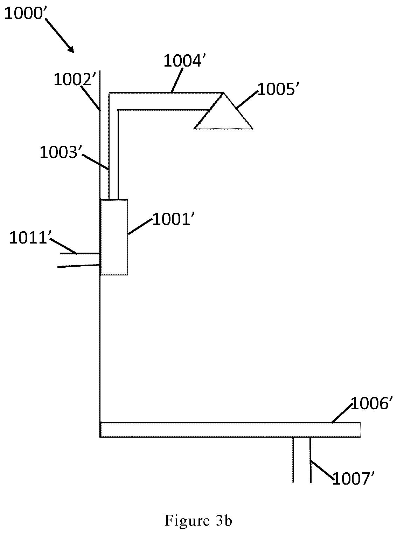

Figure 3b shows schematically another shower system 1000'. The shower system 1000' constitutes an example of a plumbing system or an ablutionary system according to the disclosure.

The shower system 1000' includes an instantaneous water heater 1001' mounted on a wall 1002'. The instantaneous water heater 1001' may comprise one or more electric heating elements operable to heat water flowing through the instantaneous water heater 1001' to a user-desired temperature.

A riser bar 1003' and an arm 1004' extending away from the wall 1002 connect the instantaneous water heater 1001' to a shower head 1005'. The riser bar 1003' and the arm 1004' convey, in use, a stream of water having the user-desired temperature to the shower head 1005'.

A shower tray 1006' according to the present disclosure is located a distance beneath the shower head 1005'. The shower tray 1006' is arranged to collect water emitted from the shower head 1005'. The shower tray 1006' may be one of the example shower trays described herein, e.g. the shower tray 1.

A water supply conduit 1011' is configured to convey, in use, a water supply stream to the instantaneous water heater 1001'.

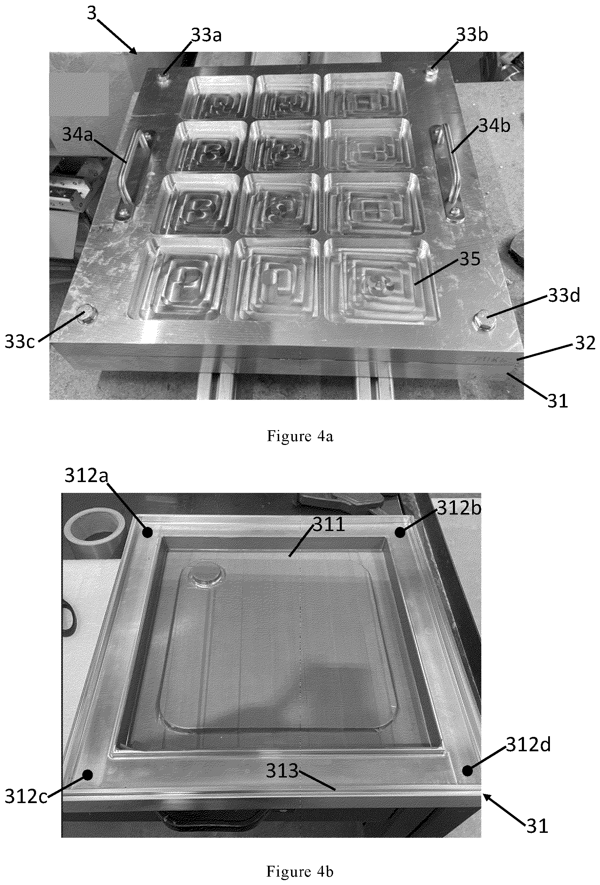

Figure 4a shows an assembled mould 3 for producing the core 23 of Figure 2a. The mould 3 comprises an A nest 31 and a B nest 32. Each of the A nest 31 and the B nest 32 may be formed from aluminium. Figure 4a shows the B nest 32 placed on top of and aligned with the A nest 31. The top of the B nest 32 comprises handles 34a, b for use in lifting the B nest 32 onto and away from the A nest 31. The top outer surface of the B nest 32 comprises a plurality of recesses 35 provided to reduce the weight of the B nest 32, thereby making it easier to lift the B nest 32 onto and away from the A nest 31.

Each of the A nest 31 and the B nest 32 comprises a bore (not shown) extending through each corner of the respective nest 31, 32. Each of the bores of the B nest 32 aligns with one of the bores of the A nest 31 when the B nest 32 is placed on top of the A nest 31 as shown in Figure 4a. The mould 3 further comprises four fasteners 33a-d in the form of bolts. Each of the fasteners 33a-d is receivable within one of the bores of the B nest 32 and the aligned bore of the A nest 31. Each of the fasteners 33a-d is fastenable, when received within the respective bores, to clamp the A nest 31 and the B nest together 32. Figure 4a shows the fasteners 33a-d fastened and the A nest 31 and the B nest 32 clamped together.

Figure 4b shows the A nest 31 of the mould of Figure 4a. Figure 4b shows the bores 312a-d configured to receive the fasteners as described above with reference to Figure 4a. The A nest 31 comprises a moulding surface 311 configured to form the top surface of the core. The moulding surface 311 comprises a polytetrafluoroethylene (PTFE) coating in the form of PTFE tape applied to the aluminium structure of the A nest 31. The PTFE coating inhibits bonding of material used to form the core to the moulding surface 311 in use. The A nest 31 further comprises a locating flange 313 which extends continuously around the perimeter of the A nest 31.

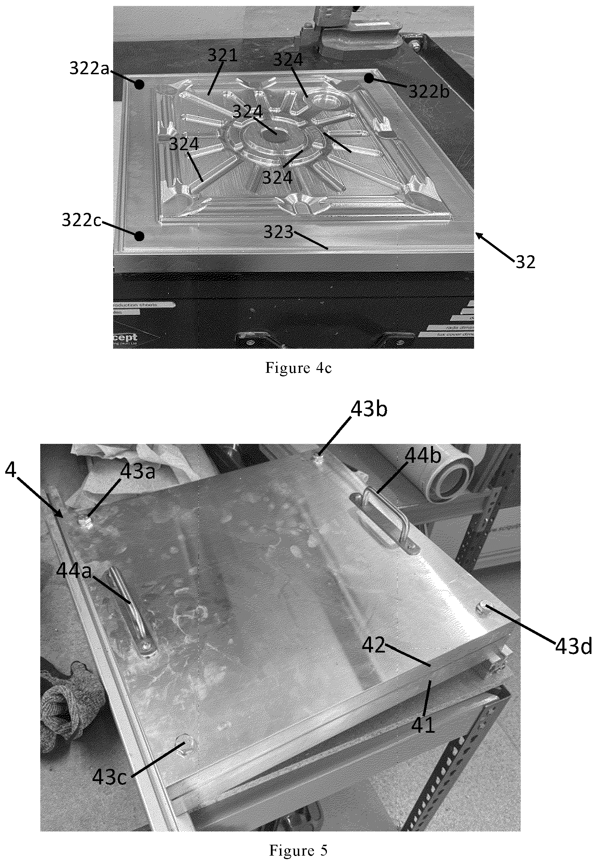

Figure 4c shows the B nest 32 of the mould of Figure 4a. Figure 4c shows the bores 322a-d configured to receive the fasteners as described above with reference to Figure 4a. The B nest 32 comprises a moulding surface 321 configured to form the underside of the core. The moulding surface 321 comprises a central portion comprising a plurality of recesses 324 configured to form the strengthening ribs and central strengthening protrusion of the underside of the core. It will be appreciated that in other implementations, the central portion of the moulding surface 321 may instead be substantially flat, for example corresponding to the substantially flat central portion of the underside of the core of the shower tray of Figure 1d.

The moulding surface 321 comprises a polytetrafluoroethylene (PTFE) coating in the form of PTFE spray applied to the aluminium structure of the B nest 32. The PTFE coating inhibits bonding of material used to form the core to the moulding surface 321 in use. The B nest 32 further comprises a recess 323 which extends continuously around the perimeter of the B nest 32. The recess 323 is configured to receive the locating flange of the A nest, as described above with reference to Figure 4b.

Figure 5 shows an assembled mould 4 for producing the core of a shower tray according to another example. Features of the mould 4 in common with the mould 3 of Figure 4a are indicated in Figure 5 using the same reference signs preceded with '4' in place of '3'. In contrast to the mould 3 of Figure 4a, the mould 4 of Figure 5 does not comprise any recesses in the top outer surface of the B nest 42.

It will be appreciated that the moulds of Figures 3a and 5 are merely illustrative and that any suitable mould may be used to form the core of the shower tray of Figure 1a or the core of Figure 2a. Where the article of sanitary ware, or part thereof, to be formed is different from the shower tray of Figure 1a, any other suitable mould may be used without departing from the scope of the invention as defined by the appended claims.

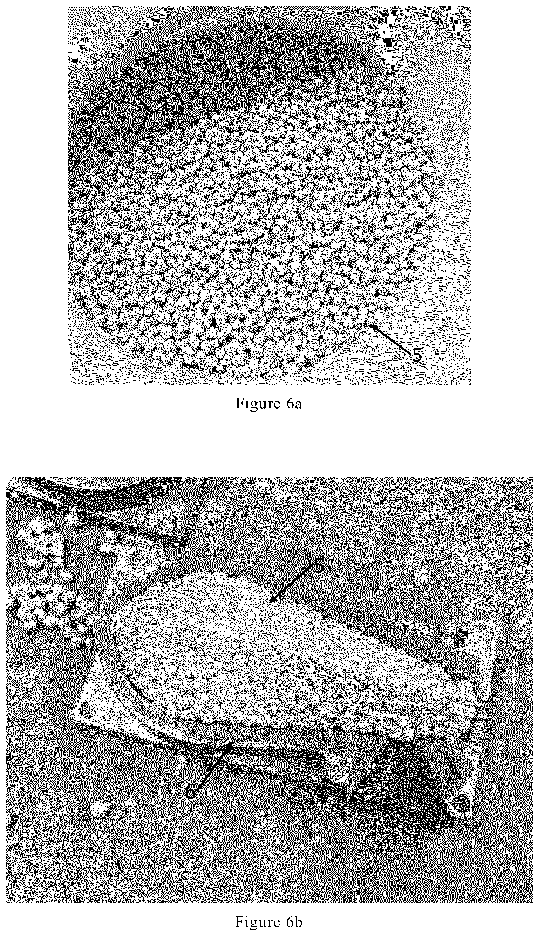

Figure 6a shows beads 5 of recyclable polymeric material, for use in a method of producing a core of an article of sanitary ware or part thereof, such as the core of the shower tray of Figure 1a or the core of Figure 2a, prior to heating. Each bead consists essentially of polyethylene terephthalate (PET). An example of suitable beads may include ArmaShape (RTM) beads available from Armacell (RTM).

Figure 6b shows the beads 5 of Figure 6a within a mould nest 6 after heating. The beads have been heated such they have expanded and fused together to form a PET foam.

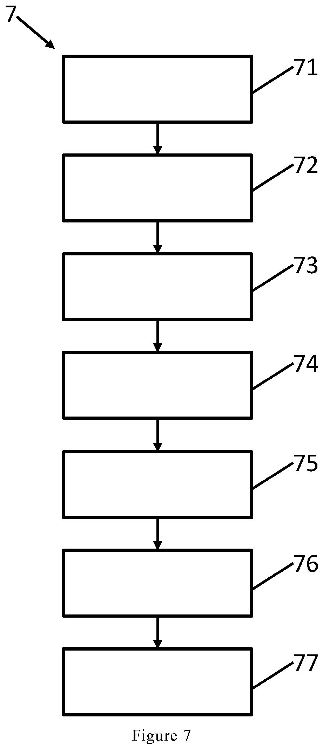

Figure 7 shows a flow chart illustrating a method 7 of producing the core of Figure 2a. The method begins at step 71 by inserting the beads of Figure 6a into the A nest of Figure 4b. After step 71, the beads are spread evenly across the moulding surface of the A nest at step 72. After step 72, the B nest of Figure 4c is placed onto the A nest at step 73. Step 73 comprises inserting the locating flange of the A nest within the corresponding recess of the B nest to align the bores extending through the corners of the B nest with the bores extending through the corners of the A nest. After step 73, the

A nest and the B nest are secured together at step 74. Step 74 comprises inserting the fasteners into the bores of the B nest and the aligned bores of the A nest and fastening each fastener to clamp the A nest and the B nest together, with the moulding surface of the B nest facing the moulding the moulding surface of the A nest. In this configuration, the A nest and the B nest define a sealed internal volume with the beads received within the internal volume.

After step 74, the mould is heated at step 75. The mould is placed into an oven which has been preheated to the desired temperature. The mould is then heated for a predetermined heating period. After the mould has been heated for the predetermined heating period, the mould is removed from the oven and allowed to cool at step 76 for a predetermined cooling period. Once the predetermined cooling period has elapsed, the formed core is removed from the mould at step 77.

It will be appreciated that the method 7 of Figure 7 is merely illustrative and that in other implementations, certain steps may be omitted, and additional steps may be included.

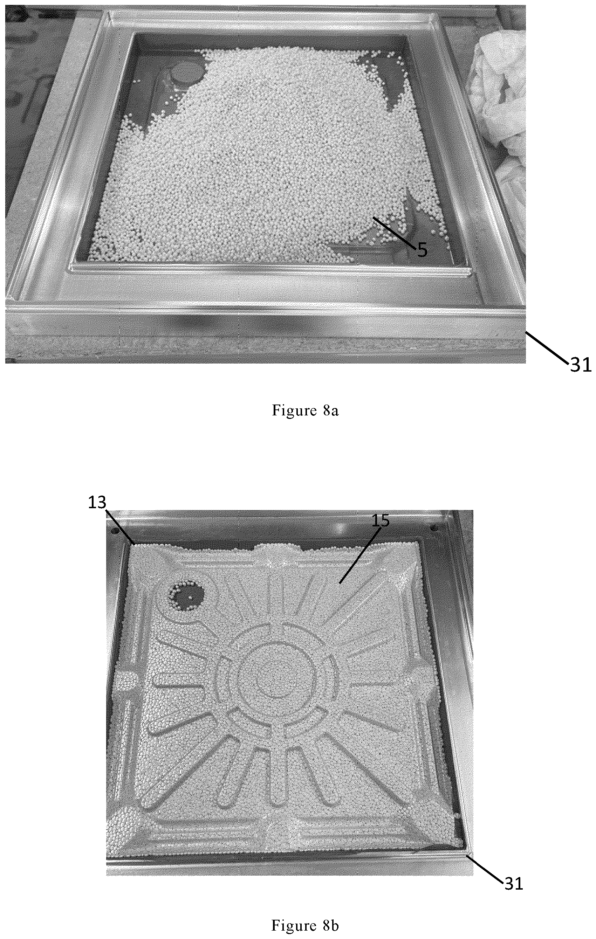

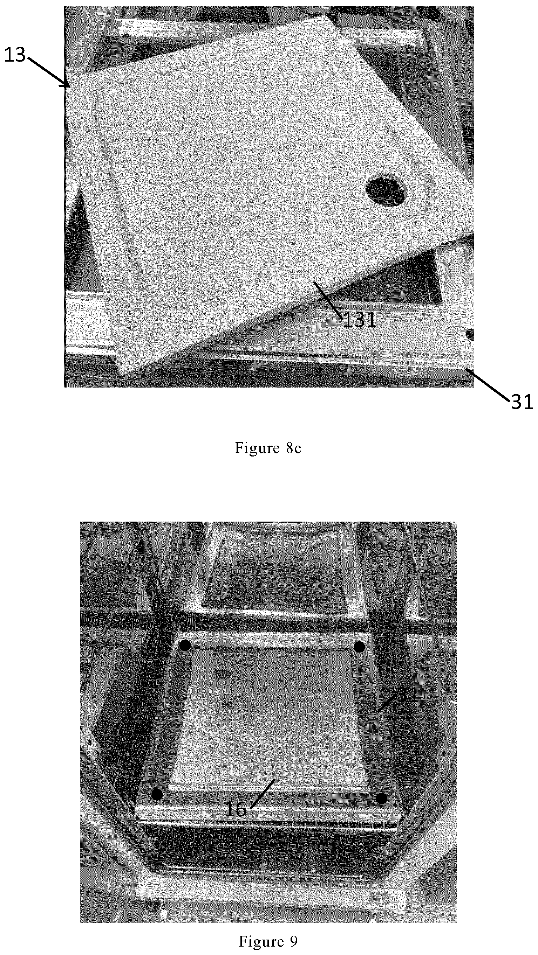

Figures 8a to 8c each show the core at a different stage of the method 7 of Figure 7. Figure 8a shows the beads 5 within the A nest 31 of the mould following step 72 of the method 7. Figure 8b shows the underside 15 of the core 13, with the core 13 situated in the A nest 31, following step 76 of the method 7. The mould is allowed to cool at step 76 of the method with the A nest and B nest still secured together to inhibit further expansion of the core 13 during cooling. Figure 8c shows the top surface 131 of the core 13 with the core 13 removed from the mould following step 77 of the method 7. The underside of the core, with the core removed from the mould following step 77 of the method 7, is as shown in Figure 2b.

It will be appreciated that the weight of beads inserted into the A nest at step 71 of the method 7 of Figure 7, the temperature at which the mould is heated and the predetermined heating time at step 75 of the method 7, and the predetermined cooling time at step 76 of the method 7, will vary in dependence on the dimensions of the core to be produced, among other things. In one non-limiting example, 300g of beads are inserted into the A nest at step 71, the mould is heated at 210°C for 50-60 minutes at step 75, and the mould is allowed to cool for 50-60 minutes at step 76.

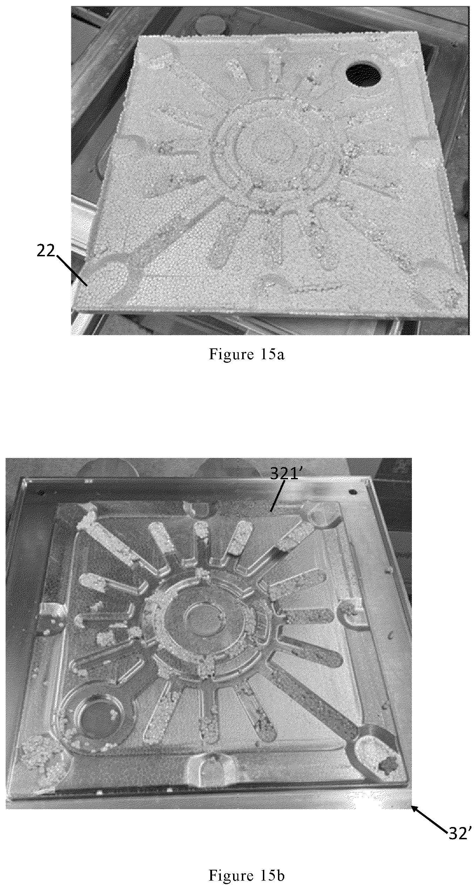

Figures 9, 10a-b, 11, 12, 13a-b, and 14a-b demonstrate the results of trials of the method of Figure 7 using the mould of Figures 4a-c. Figures 15a-b demonstrate the results of a trial of the method of Figure 7 using a variation of the mould of Figures 4a-c. It will be appreciated that these trials are not exhaustive and are merely illustrative of what effects variations in the method of Figure 7 could have on the formed core.

Figure 9 shows the underside of an example of a core 16 of a shower tray produced using the method 7 of Figure 7. In the example of Figure 9, 200g of beads were inserted into the A nest 31 at step 71 of the method 7 of Figure 7, the mould was heated at 180°C for 60 minutes at step 75, and the mould was allowed to cool for 40 minutes at step 76. The mould was not preheated prior to inserting the beads into the mould. Step 74 of the method 7 was omitted, such that the A nest and the B nest were not secured together during heating of the mould. In this example, on this occasion, the PTFE coating on the moulding surface of both the A nest and the B nest came away from the aluminium structure of the respective nest during heating of the mould.

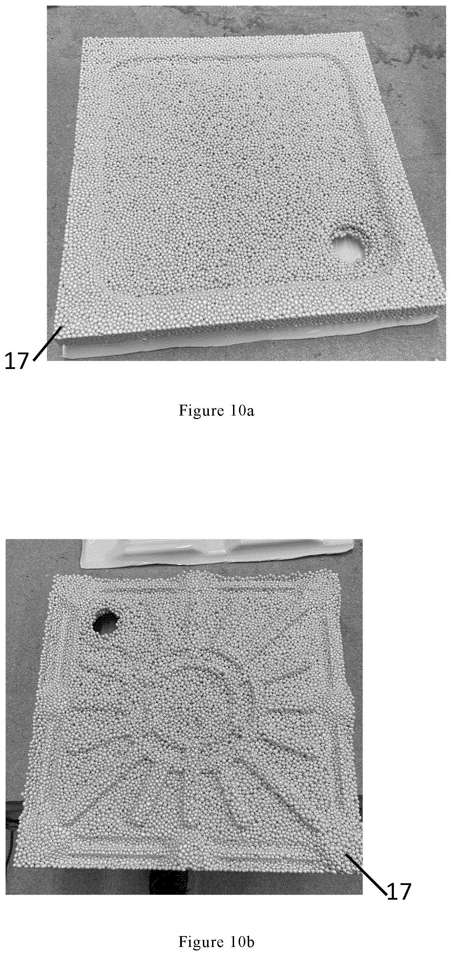

Figure 10a shows the top surface of another example of a core 17 of a shower tray produced using the method of Figure 7. Figure 10b shows the underside of the core 17 of Figure 10a. In this example, 200g of beads were inserted into the A nest at step 71 of the method 7 of Figure 7, the mould was heated at 210°C for 60 minutes at step 75, and the mould was allowed to cool for 50 minutes at step 76. The mould was not preheated prior to inserting the beads into the mould. At step 74 of the method 7, the A nest and the B nest were secured together using a G-clamp at the front and back edges of the mould. In this particular example, it was not possible to clamp the side edges of the mould using G-clamps due to the width restriction of the oven. On this occasion, the resulting core 17 as shown in Figures 10a and 10b was removable from the mould at step 77 of the method 7 without crumbling; however, the resulting core 17 was very brittle. Without wishing to be bound by any theory, it is suspected that this was a result of not enough beads being inserted into the mould at step 71 of the method 7.

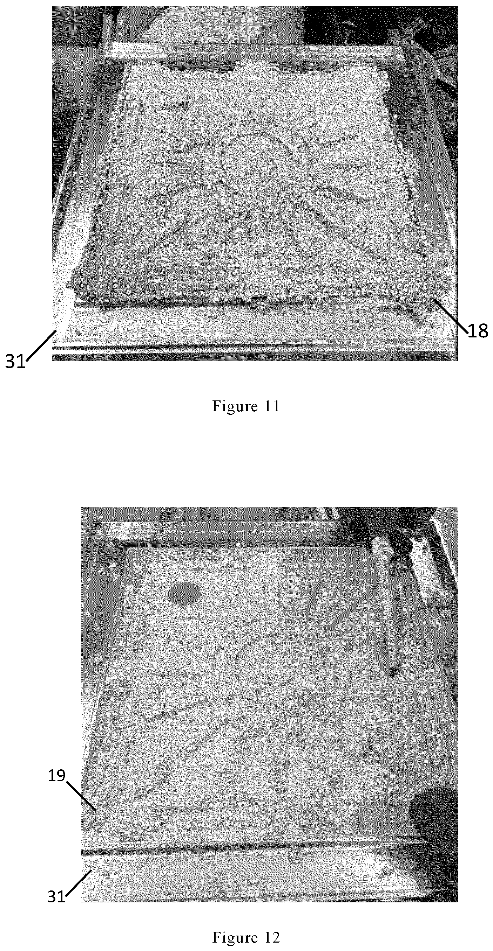

Figure 11 shows the underside of another example of a core 18 of a shower tray produced using the method of Figure 7. In this example, 270g of beads were inserted into the A nest at step 71 of the method 7 of Figure 7, the mould was heated at 210°C for 60 minutes at step 75, and the mould was allowed to cool for 50 minutes at step 76. The mould was preheated prior to inserting the beads into the mould. At step 74 of the method 7, the A nest and the B nest were secured together using two G-clamps at opposite ends of the mould. In this example, on this occasion, the beads over expanded as an insufficient clamping force between the A nest and the B nest and initial spacing between the A nest and B nest resulted in the nest moving apart during heating of the mould. This resulted in a crumbled and brittle core 18, as shown in Figure 11.

Figure 12 shows the underside of another example of a core 19. In this example, 270g of beads were inserted into the A nest at step 71 of the method 7 of Figure 7, the mould was heated at 210°C for 50 minutes at step 75, and the mould was allowed to cool for 50 minutes at step 76. The mould was preheated prior to inserting the beads into the mould. The A nest and B nest were secured together using the fasteners described above with reference to Figure 4a. In this example, the PTFE tape providing the PTFE coating of the moulding surface of the A nest was replaced with PTFE spray, as which provides the PTFE coating of the moulding surface of the B nest. Without wishing to be bound by any theory, it is suspected that this resulted in the beads adhering to the moulding surface of the A nest 31 during heating, thereby resulting in failure of the core during removal from the mould.

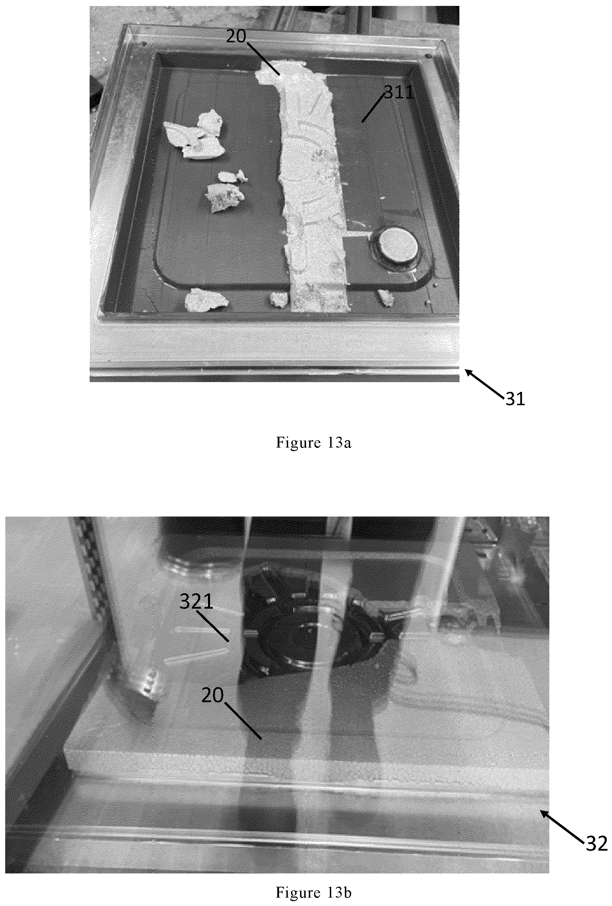

Figure 13a shows the underside of another example of a core 20. Figure 13b shows the top surface of the core 20 of Figure 13a. In this example, 270g of beads were inserted into the A nest at step 71 of the method 7 of Figure 7, the mould was heated at 210°C for 50 minutes at step 75, and the mould was left over night to cool at step 76. The mould was preheated prior to inserting the beads into the mould. The A nest and B nest were secured together using the fasteners described above with reference to Figure 4a. Without wishing to be bound by any theory, it is suspected that the extended cooling time resulted in the PTFE spray providing the PTFE coating of the moulding surface of the B nest dried out and/or resulted in the core becoming excessively rigid, thereby resulting in failure of the core during removal from the mould.

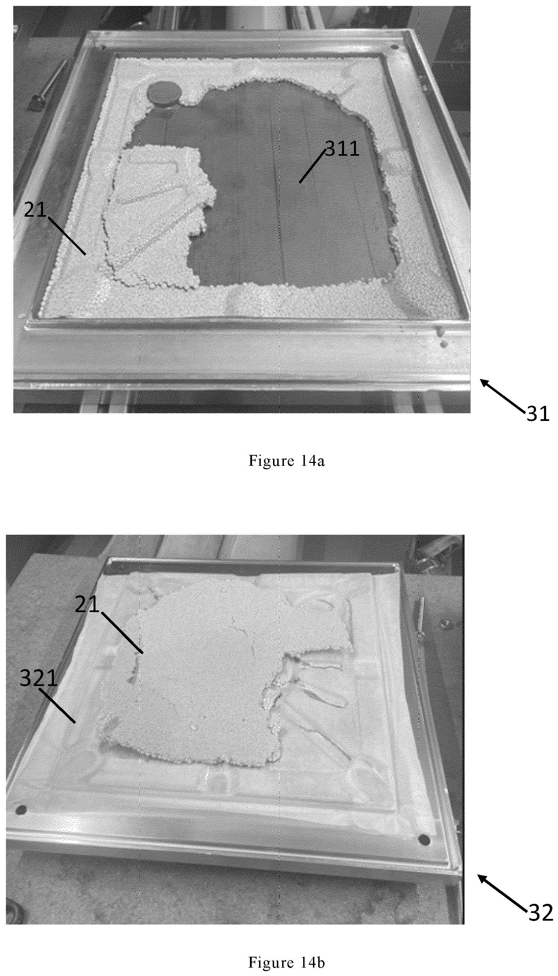

Figure 14a shows the underside of another example of a core 21. Figure 14b shows the top surface of the core 21 of Figure 14a. In this example, 270g of beads were inserted into the A nest at step 71 of the method 7 of Figure 7, the mould was heated at 210°C for 50 minutes at step 75, and the mould was allowed to cool for 50 minutes at step 76. The mould was not preheated prior to inserting the beads into the mould. The A nest and B nest were secured together using the fasteners described above with reference to Figure 4a. On this occasion, the core 21 adhered to the moulding surface 321 of the B nest, resulting in failure of the core as it was removed from the mould.

Figure 15a shows the underside of another example of a core 22. The underside of the core 22 comprises all the features of the underside of the core of Figure 2c. Figure 15b shows a variation 32' of the B nest used to form the underside of the core 22 of Figure 15a. The moulding surface 321' of the variation 32' of the B nest lacks the recesses configured to form the threshold strengthening ribs of the underside of the core of Figure 2b.

Figure 15b shows the moulding surface 321' of the B nest 32' after removal of the core 22 of Figure 15a from the mould. In this example, 270g of beads were inserted into the A nest at step 71 of the method 7 of Figure 7, the mould was heated at 210°C for 50 minutes at step 75, and the mould was allowed to cool for 50 minutes at step 76. The mould was not preheated prior to inserting the beads into the mould. The A nest and B nest were secured together using the fasteners described above with reference to Figure 4a. On this occasion, the core 22' adhered to the moulding surface 321' of the B nest 32' in the region of the recesses configured to form the strengthening ribs of the underside of the core forming the spiderweb pattern.

Table 1 below shows a weight comparison of different shower tray cores produced using a method according to an implementation of the disclosure versus a conventional method using concrete as the core material. This comparison was done between cores for a range of shower tray sizes with a corner waste. The shower tray sizes were 350 mm x 350 mm, 760 mm x 760 mm, 800 mm x 800 mm, 900 mm x 900 mm, 1000 mm x 800 mm, 1200 mm x 760 mm, 1200 mm x 800 mm and 1400 mm x 800 mm.

**Table 1**

| Tray size | Tray core volume (mm³) | PET core weight (kg) | Concrete core weight (kg) |
|---|---|---|---|
| 350 mm x 350 mm | 801106.7 | 0.27 | 1.9 |
| 760 mm x 760 mm | 7113922.6 | 1.42 | 16 |
| 800 mm x 800 mm | 7733049.9 | 1.55 | 17.3 |
| 900 mm x 900 mm | 9390321.6 | 1.88 | 21.1 |
| 1000 mm x 800 mm | 9653190.0 | 1.93 | 21.7 |
| 1200 mm x 760 mm | 11654858.0 | 2.33 | 26.21 |
| 1200 mm x 800 mm | 11654858.0 | 2.33 | 26.2 |
| 1400 mm x 800 mm | 14191694.0 | 2.84 | 31.9 |

As shown by Table 1, cores produced according to the present disclosure may provide a significant weight saving as compared with concrete cores. Shower trays comprising according to the present disclosure have been found to exhibit adequate strength and rigidity, whilst also being relatively lightweight and/or recyclable.

It will be appreciated that the invention is not limited to the implementations described above. Various modifications and improvements can be made without departing from the concepts disclosed herein. Except where mutually exclusive, any of the features may be employed separately or in combination with any other features and the disclosure extends to all combinations and sub-combinations of one or more features disclosed herein.

## Claims

1. An article of sanitary ware or part thereof, comprising:
an outer layer comprising a first material; and
a core comprising a second material;
wherein the second material comprises one or more recyclable materials.

2. The article or part of claim 1, wherein the first material is a first polymeric material and/or the second material is a second polymeric material.

3. The article or part of claim 2, wherein: the second polymeric material comprises, or consists essentially of, a polyester or a polyalkylene, optionally wherein the second polymeric material comprises, or consists essentially of, polyethylene terephthalate (PET); and/or the first polymeric material comprises acrylonitrile butadiene styrene (ABS).

4. The article or part of any preceding claim, wherein the outer layer comprises a shell defining at least partially an internal volume, and wherein the core is configured to be received at least partially in the internal volume, optionally wherein the shell comprises an upper portion and one or more side walls extending downwards from the upper portion.

5. The article or part of any preceding claim, wherein the core is a preformed core and/or wherein the core comprises a foam.

6. The article or part of any preceding claim, wherein the article is a shower tray.

7. An article of sanitary ware or part thereof comprising an outer layer and a core, wherein the core comprises, or consists essentially of, one or more polymeric materials.

8. The article or part of claim 7, wherein the one or more polymeric materials include a polyester such as a polyalkylene, optionally wherein the one or more polymeric materials include polyethylene terephthalate (PET).

9. A plumbing or an ablutionary system comprising the article or part of any one of claims 1 to 8.

10. A method of producing a core of an article of sanitary ware or part thereof, the method comprising:
inserting beads of one or more recyclable materials into a mould; and
heating the mould with the beads in the mould to cause the beads to fuse together.

11. The method of claim 10 comprising: heating the mould with the beads in the mould to a temperature of 150°C or more and/or up to 240°C; and/or heating the mould with the beads in the mould for a predetermined heating period, optionally wherein the predetermined heating period is 30 minutes our more and/or up to 90 minutes.

12. The method of claim 10 or claim 11 comprising: allowing the mould to cool after heating the mould with the beads in the mould for a predetermined cooling period, optionally wherein the predetermined cooling period is 20 minutes or more and/or up to 80 minutes; and/or comprising pre-heating the mould prior to inserting the beads into the mould.

13. The method of any of claims 10 to 12, wherein the beads comprise a cellular core encapsulated by a skin and/or wherein the beads comprise polymeric beads.

14. The method of any of claims 10 to 13, wherein the mould comprises:
an A nest comprising a moulding surface configured to form a top surface of the core; and
a B nest comprising a moulding surface configured to form an underside of the core; wherein
the A nest and the B nest define a sealed internal volume when the A nest and the B nest are secured together with the moulding surface of the B nest facing the moulding surface of the A nest.

15. A method of producing an article of sanitary ware or a part thereof, the article or part comprising an outer layer and a core, the method comprising producing the core using the method of any one of claims 10 to 14 and applying the outer layer to the core.
